# EUROPÄISCHE PATENTSCHRIFT

(11) **EP 0 555 252 B1**
(45) Veröffentlichungstag und Bekanntmachung des Hinweises auf die Patenterteilung: **07.02.1996**
(21) Anmeldenummer: 91918107.3
(22) Anmeldetag: 28.10.1991
(51) Int. Cl.: B03C 5/00, B03C 5/02, G01N 15/00

(54) **VERFAHREN ZUR HANDHABUNG MIKROSKOPISCH KLEINER, DIELEKTRISCHER TEILCHEN UND VORRICHTUNG ZUR DURCHFÜHRUNG DES VERFAHRENS**
PROCESS FOR MANIPULATING MICROSCOPICALLY SMALL DIELECTRIC PARTICLES AND DEVICE FOR IMPLEMENTING THE PROCESS
PROCEDE ET DISPOSITIF DE MANIPULATION DE PARTICULES DIELECTRIQUES DE DIMENSIONS MICROSCOPIQUES

(30) Priorität: 31.10.1990 DE 4034697
(43) Veröffentlichungstag der Anmeldung: 18.08.1993
(73) Patentinhaber: FRAUNHOFER-GESELLSCHAFT ZUR FÖRDERUNG DER ANGEWANDTEN FORSCHUNG E.V., D-80636 München (DE)
(72) Erfinder: BENECKE, Wolfgang, D-1000 Berlin 30 (DE); WAGNER, Bernd, D-1000 Berlin 38 (DE); FUHR, Günter, D-1113 Berlin (DE); HAGEDORN, Rolf, D-1094 Berlin (DE); MÜLLER, Thorsten, D-1190 Berlin (DE)
(74) Vertreter: Münich, Wilhelm, Dr.
(86) Internationale Anmeldenummer: DE9100840
(87) Internationale Veröffentlichungsnummer: WO9207657

(56) Entgegenhaltungen:
- WO-A-91/11262
- US-A- 4 390 403
- JOURNAL OF ELECTROSTATICS. Bd. 25, Nr. 1, Juni 1990, AMSTERDAM NL Seiten 109 - 123; WASHIZU: 'Electrostatic manipulation of biological objects' siehe Seite 114,Absatz 3 - Seite 122
- IEEE TRANSACTIONS ON INDUSTRY APPLICATIONS. Bd. 24, Nr. 2, 1988, NEW YORK US Seiten 217 - 222; S. MASUDA ET AL.: 'Movement of blood cells in liquid by nonuniform travelling field' siehe Seite 219, rechte Spalte - Seite 221, rechte Spalte
- IEEE INDUSTRY APPLICATIONS SOCIETY ANNUAL MEETING 1985, CONFERENCE RECORD; Seiten 1418 - 1423; S. MASUDA ET AL.: 'Separation of small particles suspended in liquid by nonuniform travelling field produced by three phase electric curtain device' siehe Seite 1420, rechte Spalte - Seite 1423

## Beschreibung

### Technisches Gebiet

Die Erfindung bezieht sich auf eine Vorrichtung zur Handhabung mikroskopisch kleiner, dielektrischer Teilchen nach dem Oberbegriff des Anspruchs 1, sowie auf ein Verfahren unter Verwendung einer Vorrichtung zur Handhabung mikroskopisch kleiner, dielektrischer Teilchen.

Zur Untersuchung mikroskopisch kleiner Teilchen wie biologische Zellen, künstliche Partikel, oder große Moleküle wie Proteine oder Eiweiße sollen diese Teilchen separiert, an den Ort der Untersuchung bewegt, fokussiert und dort gehalten werden. Die Bewegung der Teilchen soll einzeln oder in Gruppen in vorgebbare unterschiedliche Richtungen erfolgen.

Für die dreidimensionale Mikroskopie und für spektroskopische Verfahren sollen die Teilchen berührungslos in definierten Positionen gehalten werden, bei gleichzeitiger Manipulierbarkeit, beispielsweise Drehung um definierte Winkel und Achsen.

Die Fokussierung soll je nach Anwendungsfall punktförmig, linienförmig oder flächenhaft erfolgen können.

### Stand der Technik

Ein bekanntes Verfahren zur Handhabung kleiner dielektrischer Teilchen ist die Dielektrophorese. Hierbei werden die Teilchen einem inhomogenen, elektrischen Feld ausgesetzt, das die Teilchen unsymmetrisch polarisiert. Die Teilchen werden in Richtung der höheren bzw. niedrigeren Feldstärke bewegt und sammeln sich an der entsprechenden Elektrode. Mit alternierenden elektrischen Feldern können Gemenge aus unterschiedlichen Teilchensorten getrennt werden.

Beschränkungen der Einsatzfähigkeit dieses bekannten Verfahrens ergeben sich daraus, daß die Teilchen unabhängig von der Feldrichtung immer zum Ort der hohen bzw. niedrigen Feldstärke hin bewegt werden. Bei vorgegebener Geometrie ist damit eine Teilchenbewegung nur in einer Richtung möglich. Eine Anreicherung von Teilchen erfolgt an der Elektrode, so daß die Teilchen nicht in freiem Raum gehalten werden können.

Das elektrische Feld weist bei dem bekannten Verfahren in der Regel gekrümmte Feldlinien auf. Da die Teilchen entlang der Feldlinien bewegt werden, ist ein geradliniger Transport über längere Strecken, beispielsweise in Kanälen von Mikrostrukturen, nicht möglich.

Eine Vorrichtung mit der ein ähnliches Verfahren ermöglicht wird, ist aus der Veröffentlichung IEEE Transactions on Industry Applications, Bd. 24, Nr.2, New York, USA, Seiten 217 - 222 bekannt. In dieser Veröffentlichungen werden Vorrichtungen beschrieben, durch die es ermöglicht wird, biologische Zellen in einem flüssigen Medium zu bewegen. Dabei werden Schaf-Erythrocyten mittels sehr niederfrequent geschalteter Wechselspannung (Schaltfrequenz 0,1 - 10 Hz) bewegt.

Die Zellen wandern synchron zum elektrischen Feld. Es werden rotierende elektrische Felder verwendet. Dadurch kommen typische Zellbewegungen wie in Figur 5 dieser Veröffentlichung gezeigt zustande. Die Bewegung der Zellen zeichnet sich durch eine synchron zum rotierenden elektrischen Wanderfeld ausgeführte Schlängelbewegung aus.

Aus dieser Veröffentlichung ist es allerdings nicht bekannt, hochfrequente Wanderfelder zu verwenden, um eine geradlinige Bewegung der Zellen zu erreichen. Es ist ferner nicht beschrieben, daß eine geradlinige Bewegung durch eine mit dem Feld asynchrone Bewegung kleiner dielektrischer Teilchen möglich ist.

Bei einem Verfahren anderer Gattung, nämlich einem Verfahren zur Unterscheidung von in einem Medium befindlichen Partikeln ist es aus der DE 33 25 843 C2 bereits bekannt, die Teilchen in einer Flüssigkeit zu suspendieren und einem sich ändernden elektrischen Feld auszusetzen. Die Anwendung dieses Verfahrens für die Handhabung mikroskopisch kleiner, dielektrischer Teilchen ist jedoch bislang nicht in Betracht gezogen worden.

### Beschreibung der Erfindung

Der Erfindung liegt die Aufgabe zugrunde, eine Vorrichtung zur Handhabung mikroskopisch kleiner, dielektrischer Teilchen anzugeben, mit welchen die Teilchen besonders flexibel gehandhabt werden können. Weiter ist es Aufgabe der Erfindung, ein Verfahren anzugeben, mit dem eine derartige Vorrichtung effektiv genutzt werden kann.

Diese Aufgabe wird bei einer gattungsgemäßen Vorrichtung durch die kennzeichnenden Merkmale des Anspruchs 1 gelöst. Weiter wird die Aufgabe durch die kennzeichnenden Merkmale des Anspruchs 16 gelöst.

Ein hochfrequentes Wanderfeld übt auf die in einer Flüssigkeit geringer Leitfähigkeit suspendierten Teilchen Abstoßungs- oder Anziehungskräfte aus, die dadurch bedingt sind, daß die durch das elektrische Feld in den Teilchen induzierten Grenzflächenladungen hinter dem wandernden Feldvektor zurückbleiben.

Dadurch wird eine gleichförmige Teilchenbewegung ermöglicht, die stark asynchron zum elektrischen Feld verläuft, wobei die Bewegungsrichtung und die Geschwindigkeit der Teilchen von deren dielektrischen Eigenschaften und der Feldbewegung abhängen.

Die Bewegung der Teilchen kann durch wandernde Felder mit gleichförmigen, wechselnden oder mehreren Wanderfrequenzen sehr flexibel gestaltet werden. Die Teilchen können berührungslos in einem elektrodenfreien Raum gehalten werden.

Weiterbildungen und Ausgestaltungen der Erfindung sind in den Unteransprüchen gekennzeichnet.

Nach Anspruch 17 werden die dem Wanderfeld folgenden Teilchen zusätzlich elektrisch, über Feldinhomogenitäten geführt. Dies wird dadurch erreicht, daß dem Wanderfeld statische oder alternierende inhomogene Felder überlagert werden. Dadurch läßt sich der Transportkanal für die Teilchen auf einen schmalen Bereich begrenzen. Dieses Verfahren ist besonders vorteilhaft, wenn der Teilchentransport durch Mikrostrukturen erfolgen soll.

Eine Einengung des Transportkanales läßt sich gemäß Anspruch 18 auch durch mechanische Begrenzungen wie Gräben oder Wälle erreichen, mit denen Vorzugslaufbahnen für die Teilchen geschaffen werden.

Typische Werte für die angelegte Spannung, mit denen gute Ergebnisse erzielt werden, sind im Anspruch 19 angegeben. Bei Frequenzen, wie sie im Anspruch 1 angegeben sind, werden bei einem Teilchendurchmesser von einigen 10 Mikrometern Teilchengeschwindigkeiten bis zu mehreren Millimetern pro Sekunde erreicht.

Eine erfindungsgemäße Vorrichtung weist die im Anspruch 1 angegebenen Merkmale auf. Auf einem Grundkörper ist ein Multielektrodensystem aufgebracht, dessen einzelne Elektroden annähernd senkrecht zur Ausbreitungsrichtung der Wanderfelder angeordnet sind. Die Ausdehnung der Elektroden in der Richtung der Wanderfelder ist von derselben Größenordnung wie die der Teilchen, die zu handhaben sind. Ebenfalls von derselben Größenordnung sind die Abstände zwischen den Elektroden. Dabei ist der Durchmesser der handzuhabenden Teilchen allerdings größer als der Abstand und die Breite Elektroden.

Mit Hilfe einer elektronischen Schaltung werden die Elektroden mit hochfrequenten, wandernden Feldern gleichförmiger, wechselnder oder mehrerer Wanderfrequenzen angesteuert. Dadurch werden die Partikel entweder in den von den Elektroden begrenzten Räumen oder über den Elektroden in Bewegung versetzt.

Ein besonders hohes Maß an Flexibilität der Teilchenbewegung wird mit einer Vorrichtung erreicht, bei der das Multielektrodensystem eine Verzweigung aufweist. Die Verzweigung erlaubt eine Teilchenablenkung in eine wählbare Richtung und stellt somit eine Weiche für einen Teilchenstrom dar.

Nach Anspruch 2 sind die Elektroden rechteckförmig ausgebildet, wobei die Längsseiten um ein Vielfaches länger sind als die Querseiten. Die Elektroden sind gleichabständig so angeordnet, daß die Längsachsen parallel zueinander liegen und die Richtung des Wanderfeldes senkrecht zu den Längsachsen verläuft. Bei dieser Ausführungsform erfolgt die Teilchenbewegung über die Elektroden hinweg, senkrecht zu den Längsachsen der Elektroden. Sie eignet sich besonders zur Trennung von Teilchen nach ihren Laufeigenschaften, die durch die passiven elektrischen Eigenschaften und die Größe der Teilchen beeinflußt werden.

Eine Weiterbildung der vorstehenden Vorrichtung ist im Anspruch 3 beschrieben. In einem von der Mitte ausgehenden V-förmigen Bereich sind die Elektroden derart unterbrochen, daß die verbleibenden Teilelektroden jeweils einen separaten Weg für das Wanderfeld bzw. für die Teilchen in unterschiedliche Richtungen darstellt. Auf diese Weise ist eine Teilchenweiche realisiert, bei der die Teilchenbewegung über die Elektrodenflächen hin erfolgt.

Bei der Elektrodenanordnung nach Anspruch 4 schließen zwei Reihen von Elektroden einen elektrodenfreien Kanal ein, der in Richtung des Wanderfeldes verläuft. Die bewegten Teilchen können entweder in der Mitte des Kanals zentriert, oder an der durch die Elektroden gebildeten Wand entlang bewegt werden. Diese Anordnung wird zu einer Teilchenweiche weitergebildet, indem die Elektroden zunehmend nach außen versetzt angeordnet werden. In den auf diese Weise aufgeweiteten Bereich des elektrodenfreien Kanals werden zusätzliche Elektroden derart angebracht, daß eine Verzweigung des Kanals entsteht.

Mit einer Vorrichtung, bei welcher zwei zueinander senkrecht stehende Paare von Elektrodenreihen um einen in Richtung des Wanderfeldes verlaufenden Kanal angeordnet sind, können Teilchen im freien Raum des flüssigen Mediums geradlinieg bewegt, gesammelt und gehalten werden.

Eine vorteilhafte Weiterbildung der Erfindung besteht gemäß Anspruch 5 darin, daß die Elektroden geschlossene kreisringförmige Bahnen bilden, die gleichabständig um ein Zentrum angeordnet sind. In diesem Zentrum kann eine Senke, eine Öffnung im Trägermaterial, oder eine Erhebung ausgebildet sein. Mit dieser Vorrichtung können Teilchen über Elektroden je nach Laufrichtung des Hochfrequenzfeldes in das Zentrum oder zum Rand befördert werden.

Werden die Elektrodenringe nach Anspruch 6 in Sektoren unterteilt, so können die Teilchen in den dadurch entstehenden elektrodenfreien Kanälen bewegt werden. Die Teilchen können aus verschiedenen Quadranten des Elektrodenringsystems zum Zentrum geführt und von diesem in eine gewünschte Richtung weggeführt werden. Mit dieser Vorrichtung wird ein besonders flexibler Mikromanipulator zur Handhabung mikroskopisch kleiner Teilchen zur Verfügung gestellt, der sich insbesondere für Arbeiten mit lebenden biologischen Zellen eignet.

Gemäß Anspruch 7 sind auf einer Grundplatte, die als dünne Membrane ausgebildet ist, viele Elektrodensysteme aufgebracht. Die dünne Membrane ist in Bereichen dieser Systeme durchbrochen, so daß die Teilchen durch diese Öffnungen hindurchströmen können. Die Teilchen können die Öffnungen jedoch nur passieren, wenn sie durch die wandernden Hochfrequenzfelder in Richtung der Zentren befördert werden. Auf diese Weise stellt die Vorrichtung eine steuerbare semipermeable Membran dar.

Bei der Vorrichtung nach Anspruch 8 sind die Elektroden als ellipsenförmige Bahnen ausgebildet, die um einen gemeinsamen Brennpunkt angeordnet sind. Die Vorrichtung eignet sich zur Zentrierung und Dezentrierung von Teilchen, wobei die Dezentrierung nicht radialsymmetrisch sondern verstärkt in Vorzugsrichtungen erfolgt.

Eine erfindungsgemäße Vorrichtung zur Fokussierung und Trennung von Teilchen in einer kreisförmigen Kammer ist im Anspruch 9 gekennzeichnet. Um eine kreisförmige Kammer sind wenigstens vier Elektroden ringförmig angeordnet. Durch ein mit Hilfe der Elektroden erzeugtes, kreisförmig umlaufendes Feld werden Teilchen je nach ihren dielektrischen Eigenschaften im Zentrum der Kammer gesammelt oder an den Elektrodenoberflächen angelagert.

In den Ansprüchen 10 und 11 werden Weiterbildungen einer erfindungsgemäßen Vorrichtung angegeben, mit welchen die Laufeigenschaften der Teilchen beeinflußt werden. Durch die Veränderung der Oberflächenstruktur des Grundkörpers und der Elektroden werden die Gleit-bzw. Rollreibungskräfte, die durch die Unterlage auf die Teilchen ausgeübt werden, verändert. Diese Maßnahmen werden vorteilhaft bei der Trennung verschiedener Teilchensorten eingesetzt. Eine Isolationsschicht auf den Elektroden, die lokal unterschiedliche Dicken aufweist, führt dazu, daß das elektrische Feld an verschiedenen Stellen unterschiedlich stark auf die Teilchen einwirkt. Auf diese Weise werden Vorzugslaufbahnen für die Teilchen geschaffen. Vertiefungen bzw. Erhöhungen im Bereich der elektrodenfreien Kanäle führen dazu, daß sich die Teilchen dort verstärkt oder in geringerer Konzentration ansammeln.

Gemäß Anspruch 12 werden die Vertiefungen und Erhöhungen im Bereich der Kanäle vorzugsweise mit Hilfe von Ätzverfahren erzeugt. Durch die Verwendung von in der Mikrostrukturtechnik üblichen Materialien zur Herstellung des Grundkörpers können die dort angewandten Prozeßschritte vorteilhaft eingesetzt werden. Da die Ausdehnung der Elektroden in Richtung des Wanderfeldes mit der Größe der zu handhabenden Teilchen vergleichbar ist, werden die Elektroden vorzugsweise mit photolithographischen Methoden strukturiert und galvanisch abgeformt. Dabei können Elektrodendicken von einigen um bis zu einigen hundert µm erreicht werden. Bei dieser Methode ist es ohne weiteres möglich, die Höhe hintereinander angeordneter Elektroden sukzessive zu vergrößern, so daß eine Bewegung von Teilchen aus der Oberfäche heraus möglich ist. Da die Elektroden den Suspensionen ausgesetzt sind, werden zu ihrer Herstellung vorzugsweise chemisch inerte Materialien verwendet. Ein wirksamer Schutz der Elektroden vor äußeren Einflüssen kann dadurch erreicht werden, daß sie mit einer Isolationsschicht überzogen werden.

Eine besonders vorteilhafte Weiterbildung der Vorrichtung besteht nach Anspruch 13 darin, daß das Multielektronensystem zusammen mit der Schaltung zur Erzeugung der elektrischen Wanderfelder und zur Auswertung der Partikelbewegung auf einem gemeinsamen Grundkörper integriert wird.

Nach Anspruch 14 ist die Vorrichtung kapselbar. Hierzu wird eine Deckplatte aus einem in der Mikrostrukturtechnik üblichen Material mit der Grundplatte beispielsweise durch Klebetechnik oder durch anodisches Sonden verbunden. Diese Platte kann ebenfalls Elektroden und/oder Mulden und Kanäle aufweisen.

Gemäß der vorteilhaften Weiterbildung nach Anspruch 15 werden mehrere Grundkörper mit Elektrodensystemen miteinander verbunden. Dadurch entstehen Kaskaden von Elektroden sowie verlängerte Kanäle oder Räume, in denen die Teilchen gelagert, getrennt, angereichert oder transportiert werden können.

Die mit der Erfindung erzielten Vorteile bestehen insbesondere darin, daß eine besonders flexible Handhabung mikroskopisch kleiner, dielektrischer Teilchen im Mikrometerbereich ermöglicht wird. Die Teilchen können berührungsfrei durch enge Kanäle auf geradliniegen Bahnen bewegt werden, sie können durch Teilchenweichen an verschiedene Zielorte gebracht und dort berührungsfrei für Untersuchungen gehalten werden. Teilchen können fokussiert und defokussiert und nach ihren dielektrischen Eigenschaften sortiert werden.

In einem Multielektronensystem können verschiedene Anordnungen zum linearen Transport, zur Fokussierung, zur Halterung sowie Verzweigungen aneinandergefügt werden, so daß komplexe Bewegungsabläufe der Teilchen realisiert werden können. Damit ist eine Manipulation von Teilchen in Mikrostrukturen möglich.

Das erfindungsgemäße Verfahren und die erfindungsgemäße Vorrichtung eignen sich für den Einsatz in der Biotechnologie, auf dem Gebiet der molekularen Trenn-, Fokussierungs- und Mikrotransporttechnik. Sie eignen sich ebenso zur Handhabung von künstlichen Teilchen wie von lebenden Zellen.

### Kurze Beschreibung der Zeichnung

Ausführungsbeispiele der Erfindung sind in den Zeichnungen schematisch dargestellt und werden im folgenden ohne Beschränkung des allgemeinen Erfindungsgedankens näher beschrieben. Es zeigen:
- Figur 1: eine Vorrichtung zur linearen Bewegung von Teilchen über Elektroden,
- Figur 2: eine Teilchenweiche zur verzweigten Bewegung über Elektroden,
- Figur 3: eine Vorrichtung zur linearen Bewegung von Teilchen in einem elektrodenfreien Raum,
- Figur 4: die Ansteuerung der Elektroden einer Vorrichtung zu vier nacheinander folgenden Zeitpunkten,
- Figur 5: eine Vorrichtung zur Fokussierung von Teilchen in einem elektrodenfreien Raum,
- Figur 6: eine Teilchenweiche zur verzweigten Bewegung im elektrodenfreien Raum,
- Figur 7: eine Vorrichtung zur räumlichen Fokussierung von Teilchen,
- Figur 8: eine Vorrichtung zur Zentrierung und Dezentrierung von Teilchen,
- Figur 9: eine Vorrichtung, die als semipermeable Membran ausgebildet ist,
- Figur 10: eine Vorrichtung mit elliptischer Elektrodenanordnung,

### Beschreibung von Ausführungsbeispielen

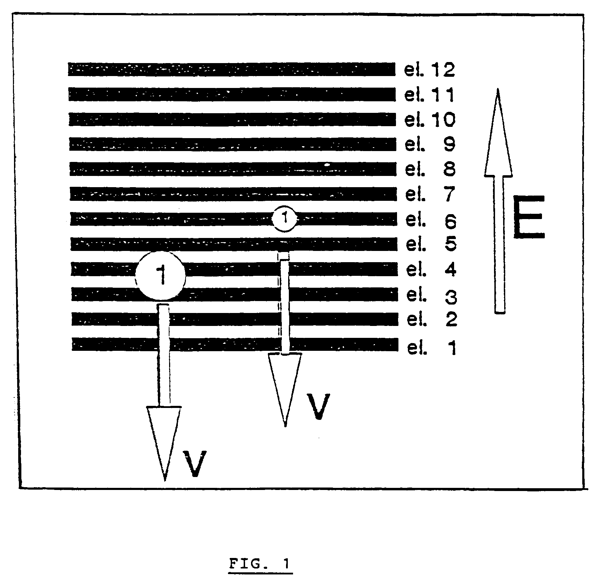

Die Figur 1 zeigt eine Anordnung von 12 langgestreckten Elektroden el.1 bis el.12, die so hintereinander angeordnet sind, daß ihre Längsachsen parallel zueinander liegen. Der Pfeil E gibt die Laufrichtung des Feldstärkevektors an. Die Bewegung der Teilchen 1 erfolgt über die Elektroden el.1 bis el.12 senkrecht zu deren Längsachsen in Richtung der Pfeile V.

Die Elektroden weisen eine Länge von einigen hundert Mikrometern und eine Breite von etwa 10 Mikrometern auf und sind etwa 10 Mikrometer voneinander beabstandet. Bei einer Elektrodenspannung von 10 Volt und einer Wanderfrequenz von 0,2 bis ca. 10 Megahertz werden bei Teilchendurchmessern von 20 bis 70 Mikrometern Teilchengeschwindigkeiten von mehreren Millimetern pro Sekunde gemessen. Die Teilchenbewegung erfolgt stark asynchron zum Wanderfeld, ca. 10⁻² bis 10⁻⁷ mal langsamer.

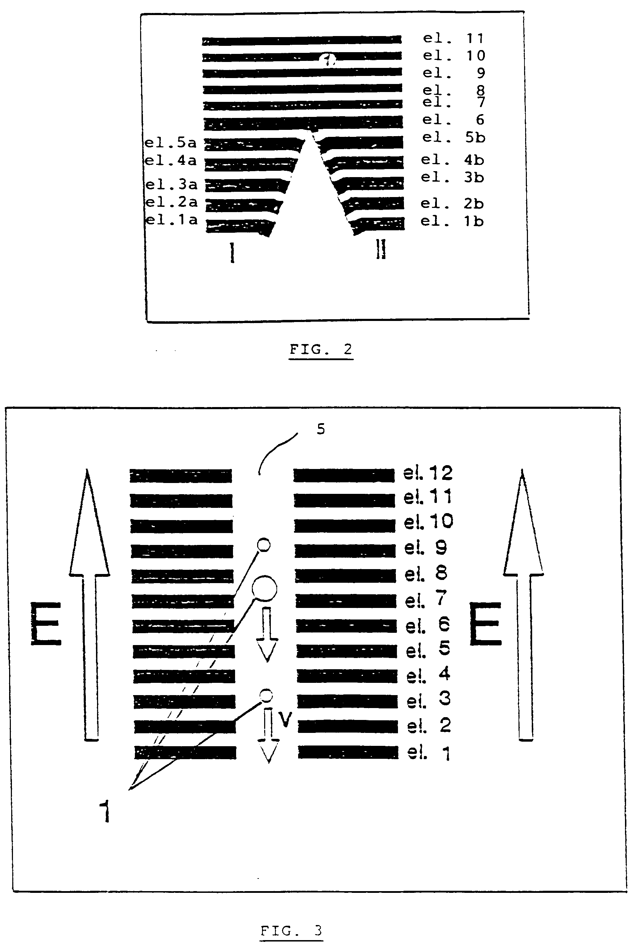

In Figur 2 ist eine Teilchenweiche dargestellt, bei welcher die Teilchen wie im vorangehenden Ausführungsbeispiel über die Elektrodenflächen wandern. Die ersten fünf Elektroden sind in einem zentralen Bereich derart unterbrochen, daß eine Elektrodenreihe I mit den Elektroden el.1a bis el.5a und eine Elektrodenreihe II mit den Elektroden el.1b bis el.5b entsteht.

Ein Teilchen 1, das sich auf die Elektrodenverzweigung zubewegt, wird entweder über die Elektrodenreihe I, oder die Elektrodenreihe II geführt, jenachdem ob die Elektroden el.1a bis el.5a oder die Elektroden el.1b bis el.5b mit einer Spannung beaufschlagt werden.

Die in Figur 3 gezeigte Vorrichtung weist zwei Reihen von Elektroden el.1 bis el.12 auf, die einen Kanal 5 begrenzen. Die Teilchen 1 werden durch das in Richtung des Pfeils E wandernde Feld im elektrodenfreien Raum des Kanals 5 in Richtung der Pfeile V bewegt.

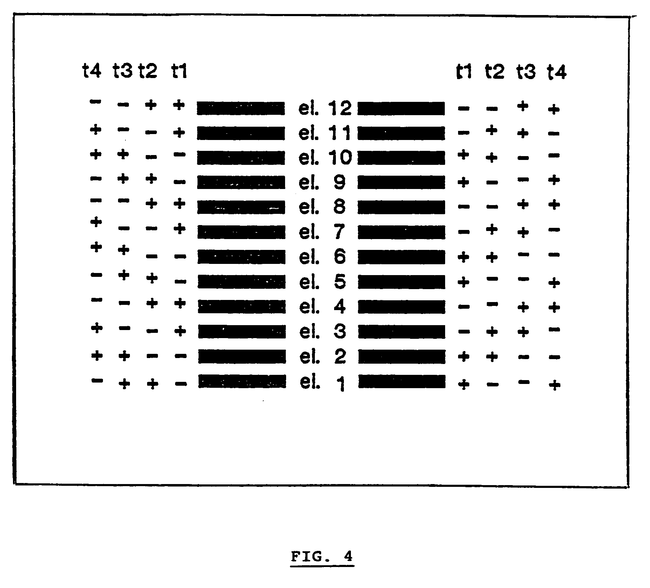

Die elektrische Ansteuerung der Elektroden el.1 bis el.12 ist in Figur 4 dargestellt, wobei die Vorzeichen der Spannungen, mit welchen die Elektroden zu den vier aufeinanderfolgenden Zeitpunkten t1 bis t4 beaufschlagt werden, angegeben sind.

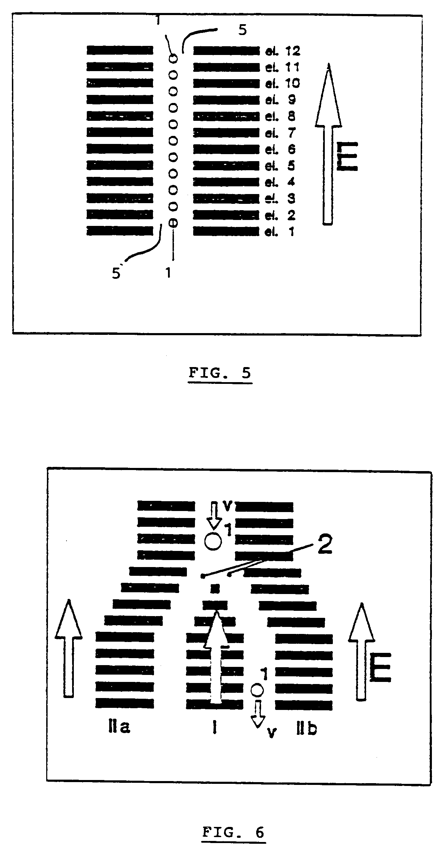

Die Figur 5 zeigt, daß sich die vorangehend erläuterte Vorrichtung auch zur Fokussierung und Haltung von Teilchen eignet. In dem Kanal 5 wird eine Dispersion von ca. 5% Dextran-Wasserkügelchen mit einem Durchmesser von weniger als einem Mikrometer in 50% n-Propanol gebracht. Bei Anlegen eines Wanderfeldes E von 1 bis 15 V und einer Frequenz von 800 Kilohertz an beide Elektrodenreihen werden die Dextran-Wasserkügelchen zwischen die Elektroden bewegt und jeweils im Zentrum von zwei Paaren gegenüberliegender Elektroden angereichert, so daß sie sich zu gut sichtbaren Tropfen 1 zusammenschließen. Die sichtbaren Tropfen 1 werden in den dargestellten Positionen gehalten.

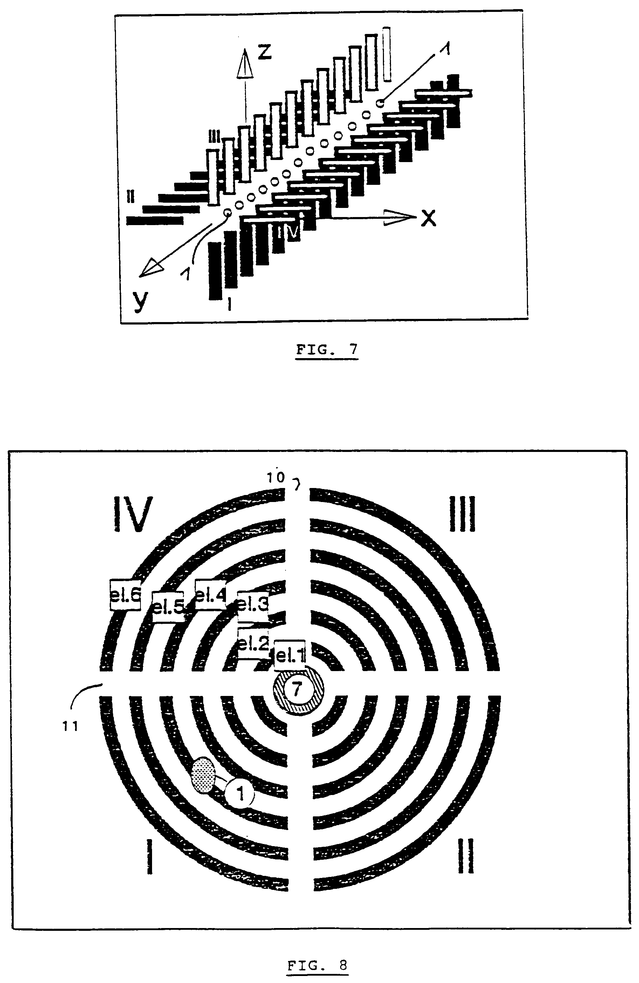

In Figur 6 ist eine Vorrichtung mit einer Elektrodenanordnung dargestellt, die eine verzweigte Bewegung von Teilchen im elektrodenfreien Raum gestattet. Die Elektroden der beiden Elektrodenreihen IIa und IIb sind im zentralen Bereich zunehmen versetzt angeordnet, so daß ein breiter Kanal entsteht. In diesem Kanal ist eine weitere Elektrodenreihe I angebracht. Die Länge der Elektroden dieser Reihe I nimmt entsprechend der Versetzung der äußeren Elektrodenreihe zu, so daß zwei Kanäle konstanter Breite entstehen, die in einen Kanal einmünden. An der Verzweigungsstelle sind zusätzlich, punktförmige Elektroden 2 angeordnet. Je nachdem, ob das Wanderfeld durch die Elektrodenreihen I und IIa oder I und IIb erzeugt wird, werden die Teilchen durch den entsprechenden Kanal geführt. Die Laufrichtung der Teilchen kann auch durch Ansteuerung der einen oder anderen Zusatzelektrode 2 bestimmt werden.

Bei der in Figur 7 dargestellten Vorrichtung sind ein erstes Paar von Elektrodenreihen II und IV und ein zweites Paar von Elektrodenreihen I und III derart senkrecht zueinander angeordnet, daß sie einen dreidimensionalen Kanal begrenzen. In diesem Kanal können die Teilchen 1 im freien Raum des flüssigen Mediums, das sich zwischen den Elektrodenreihen I, II, III und IV befindet, gesammelt und gehalten werden. Die Vorrichtung eignet sich ebenso zum linearen Transport von Teilchen.

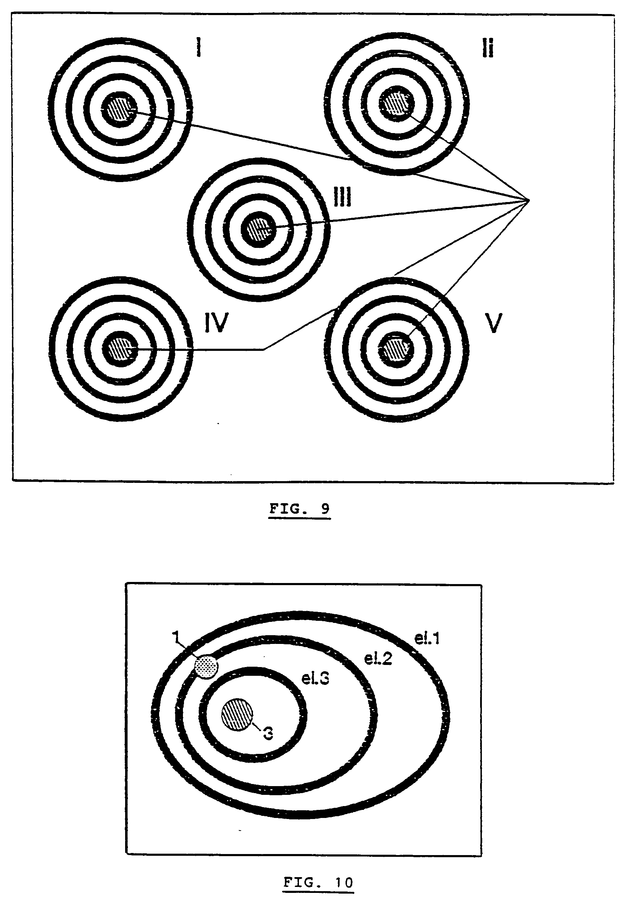

Die Figur 8 zeigt eine erfindungsgemäße Vorrichtung zur Zentrierung oder Dezentrierung von Teilchen. Die Elektroden el.1 bis el.6 sind kreissektorartig, konzentrisch und gleichabständig um einen Arbeitsraum 7 in vier Quadranten I bis IV derart angeordnet, daß sie zwei senkrecht aufeinanderstehende Kanäle 10 und 11 begrenzen. Die Teilchen 1 lassen sich über die Elektrodenflächen oder in den elektrodenfreien Kanälen 10 und 11 je nach Laufrichtung des Hochfrequenzfeldes in den Arbeitsraum 7 oder vom Arbeitsraum 7 wegbefördern. Durch geeignete Ansteuerung können die Teilchen von einem Quadranten über den Arbeitsraum in einen beliebigen anderen Quadranten oder in einen der Kanäle transportiert werden. Dieser vielseitige Mikromanipulator ist besonders für das Arbeiten mit lebenden biologischen Zellen geeignet. Zur Zentrierung und Dezentrierung von Teilchen können die Elektroden als geschlossene ringförmige Bahnen ausgebildet sein.

Die Figur 9 zeigt eine Vorrichtung, bei welcher auf einer dünnen Membrane viele konzentrische, ringförmige Elektrodensysteme aufgebracht sind. In der Figur ist nur ein Ausschnitt von fünf Systemen I bis IV dargestellt. Die Membrane weist in den zentralen Bereichen der Systeme durchgängige Öffnungen auf. Kleine dielektrische Teilchen können diese Öffnungen nur passieren, wenn sie durch die wandernden Hochfrequenzfelder in Richtung des Zentrums befördert werden. Auf diese Weise wirkt die Vorrichtung wie eine steuerbare semipermeable Membrane. Wahlweise können alle oder nur bestimmte Öffnungen auf Durchlaß oder Sperren geschaltet werden.

Bei der in Figur 10 dargestellten Ausgestaltung der Erfindung sind die Elektroden als ellipsenförmige Bahnen el.1 bis el.3 ausgebildet, die um einen gemeinsamen Brennpunkt so angeordnet sind, daß ihre großen Achsen auf einer Geraden liegen. Durch ein wanderndes elektrisches Hochfrequenzfeld, das sich auf den gemeinsamen Brennpunkt zu oder wegbewegt, werden Teilchen 1 in den zentralen Bereich 3 oder von diesem wegtransportiert.

Eine weitere Vorrichtung weist vier rechteckige Elektroden auf, die sternförmig um einen zentralen Bereich angeordnet sind. Bei dieser Vorrichtung läuft das elektrische Feld kreisförmig um. Die Vorrichtung dient zur Trennung und Fokussierung von Teilchen. Wenn eine Dispersion mit zwei Teilchensorten, beispielsweise Zellulosesulfatkügelchen und lebende Hefezellen in Wasser mit einer Leitfähigkeit von 50 bis 100 µS/cm, in das System eingebracht und einem umlaufenden Feld von ca. 2 Megahertz ausgesetzt werden, so werden die Zellulosesulfatkügelchen im Zentrum der Vorrichtung gesammelt, während die Hefezellen an die Elektrodenoberflächen wandern und dort anhaften.

## Patentansprüche

1. Vorrichtung zur Handhabung mikroskopisch kleiner dielektrischer kleiner Teilchen, mit
- einem Grundkörper,
- einem auf dem Grundkörper angebrachten Multielektrodensystem, das ein elektrisches Wanderfeld erzeugt und dessen Elektroden annähernd senkrecht zur Wanderungsrichtung des Wanderfeldes nebeneinander angeordnet sind, und
- einer elektronischen Schaltung zur sukzessiven Beaufschlagung der Elektroden mit geeigneten elektrischen Spannungen,
dadurch **gekennzeichnet**, daß sowohl der Abstand als auch die Breite der Elektroden kleiner als der Durchmesser der handzuhabenden Teilchen ist, und
daß die Wanderfrequenz der elektrischen Felder in einem Bereich zwischen 0,1 und 100 MHz liegt.

2. Vorrichtung nach Anspruch 1,
dadurch **gekennzeichnet**, daß die Elektroden eine langgestreckte Rechteckform aufweisen und gleichabständig parallel zueinander so angeordnet sind, daß die Richtung des Wanderfeldes senkrecht zu den Längsachsen der Elektroden verläuft.

3. Vorrichtung nach Anspruch 1 oder 2,
dadurch **gekennzeichnet**, daß die Elektroden ausgehend von einer Elektrode im zentralen Bereich des Multielektrodensystems in einem in Richtung des Wanderfeldes sich V-förmig erweiternden Bereichs unterbrochen sind, wobei die Elektroden in der Umgebung der Unterbrechung derart abgeknickt sind, daß sie senkrecht in den V-förmigen Bereich einmünden.

4. Vorrichtung nach einem der Ansprüche 1 bis 3,
dadurch **gekennzeichnet**, daß zwei Reihen von Elektroden derart angeordnet sind, daß sich die Elektroden der beiden Reihen gegenüberliegen und zwischen den beiden Reihen entlang der Wanderungsrichtung des elektrischen Feldes ein elektrodenfreier Kanal entsteht und daß die Elektroden der beiden Reihen derart gegeneinander versetzt angeordnet sind, daß die Breite des elektrodenfreien Kanals von einem konstanten Wert auf ein Mehrfaches dieses Wertes zunimmt und daß im Bereich der großen Kanalbreite eine zusätzliche Reihe von Elektroden zunehmender Elektrodenbreite so angebracht ist, daß eine Kanalverzweigung ausgebildet wird und daß an der Verzweigungsstelle zwei weitere punktförmige Elektroden angeordnet sind.

5. Vorrichtung nach Anspruch 1,
dadurch **gekennzeichnet**, daß die Elektroden als kreisringförmige Bahnen ausgebildet sind, die konzentrisch und gleichabständig angeordnet sind.

6. Vorrichtung nach Anspruch 5,
dadurch **gekennzeichnet**, daß die Elektroden als Kreisringsektoren ausgebildet und elektrodenfreie Kanäle einschließen.

7. Vorrichtung nach einem der Ansprüche 5 oder 6, dadurch **gekennzeichnet**, daß auf dem Grundkörper viele Elektrodensysteme angeordnet sind, wobei der Grundkörper aus einer dünnen Membrane besteht, die im Zentrum der kreisförmigen Elektroden durchgängige Öffnungen aufweist, welche mit Hilfe der Kochfrequenzfelder in ihrer Durchlässigkeit für Teilchen veränderbar sind.

8. Vorrichtung nach Anspruch 1,
dadurch **gekennzeichnet**, daß die Elektroden als ellipsenförmige Bahnen ausgebildet sind, die einen gemeinsamen Brennpunkt aufweisen und deren große Achsen auf einer Geraden liegen.

9. Vorrichtung nach Anspruch 1,
**gekennzeichnet** durch einen Grundkörper auf dem vier oder mehr sternförmige Elektroden um einen zentralen Bereich angeordnet sind, mit einer elektronischen Schaltung, die die Elektroden sukzessive derart mit einer geeigneten Spannung beaufschlagt, daß ein hochfrequentes kreisförmig umlaufendes elektrisches Feld aufgebaut wird.

10. Vorrichtung nach einem der Ansprüche 1 bis 9,
dadurch **gekennzeichnet**, daß die Elektrodenoberflächen mit isolierenden Materialien mit rauher oder glatter Struktur überzogen sind, wobei der Überzug Mulden, Wellen und Bereiche unterschiedlicher Stärke aufweist.

11. Vorrichtung nach einem der Ansprüche 1 bis 9, dadurch **gekennzeichnet,** daß die Bereiche zwischen den Elektroden und die Kanäle partielle Vertiefungen oder Erhöhungen und Bereiche unterschiedlicher Oberflächenrauhigkeiten aufweisen.

12. Vorrichtung nach einem der Ansprüche 1 bis 11,
dadurch **gekennzeichnet**, daß der Grundkörper aus halbleitendem Material (vorzugsweise einem Siliciumwaver), Glas oder Keramik besteht, daß die partiellen Vertiefungen oder Erhöhungen durch Ätzverfahren erzeugt sind, daß die Elektroden aus einem chemisch inerten Material, vorzugsweise aus Gold bestehen und mit photolithographischen Methoden strukturiert und galvanisch abgeformt sind und daß die dielektrischen Schichten auf den Elektroden aus SiO₂, Si₃N₄ oder TiO₂ bestehen.

13. Vorrichtung nach einem der Ansprüche 1 bis 12, dadurch **gekennzeichnet**, daß die elektronische Schaltung zur Erzeugung der elektrischen Wanderfelder und zur Auswertung der Partikelbewegung zusammen mit dem Multielektrodensystem auf einem gemeinsamen Grundkörper integriert ist.

14. Vorrichtung nach einem der Ansprüche 1 bis 13, dadurch **gekennzeichnet**, daß zur Kapselung des Systems eine Deckplatte aus halbleitendem Material, Keramik oder Glas vorgesehen ist, die mit der Grundplatte verbunden ist und ebenfalls mit Elektroden und/oder Mulden und Kanälen versehen sein kann.

15. Vorrichtung nach einem der Ansprüche 1 bis 14, dadurch **gekennzeichnet**, daß mehrere Grundkörper miteinander verbunden werden, so daß Kaskaden gebildet werden oder Räume oder Kanäle entstehen, in denen die Teilchen gelagert, getrennt, angereichert oder transportiert werden können.

16. Verfahren unter Verwendung einer Vorrichtung nach einem der Ansprüche 1 bis 15,
dadurch **gekennzeichnet**, daß die Teilchen in einer Flüssigkeit oder einem GeI von geringer elektrischer Leitfähigkeit suspendiert und einem elektrischen Feld ausgesetzt werden, das aus einem oder mehreren in vorgebbare Richtungen wandernde Hochfrequenzfelder besteht.

17. Verfahren nach Anspruch 16,
dadurch **gekennzeichnet**, daß die Teilchen elektrisch, mittels Feldinhomogenitäten, geführt werden.

18. Verfahren nach Anspruch 6,
dadurch **gekennzeichnet**, daß die Teilchen mittels mechanischer Begrenzungen geführt werden.

19. Verfahren nach einem der Ansprüche 16 bis 19, dadurch gekennzeichnet, daß die Amplitude der angelegten Spannung zwischen 10⁻² und 100 Volt liegt.

## Claims

1. Device for manipulating microscopic dielectric particles, comprising:
- a substrate body,
- a multi-electrode system disposed on said substrate body for generating a travelling electric field, and including electrodes disposed adjacent to each other approximately orthogonally to the travelling direction of said travelling field, and
- an electronic circuit for successive application of appropriate electrical voltages to said electrodes,
**characterized** in that both the spacing and the widths of said electrodes are smaller than the diameter of the particles to the manipulated, and
that the travelling frequencies of said electric fields range from 0.1 to 100 MHz.

2. Device according to Claim 1,
**characterized** in that said electrodes present an elongate rectangular shape and are equidistantly disposed in parallel to each other such that the direction of said travelling field extends orthogonally to the longitudinal axes of said electrodes.

3. Device according to Claim 1 or 2,
**characterized** in that, starting out from an electrode in the central region of said multi-electrode system, said electrodes present discontinuities in a region diverging in V-shape in the direction of said travelling field, wherein said electrodes are bent off in the vicinity of said discontinuity in such a way that they open at right angles into said V-shaped region.

4. Device according to any of Claims 1 to 3,
**characterized** in that two rows of electrodes are disposed such that the electrodes of both rows are opposite to each other and that an electrode-free channel is created between said two rows along the travelling direction of the electric field, and in that the electrodes of said two rows are mutually offset in such a way that the width of said electrode-free channel increases from a constant value to a multiple of this value, and in that in the region of the wide channel width an additional row of electrodes having an increasing electrode width is disposed so as to form a channel branching, and in that two further punctiform electrodes are disposed at the branching position.

5. Device according to Claim 1,
**characterized** in that said electrodes are configured as annular paths which are disposed in a concentric and equidistant arrangement.

6. Device according to Claim 5,
**characterized** in that said electrodes are configured as sectors of an annulus and enclose electrode-free channels.

7. Device according to any of Claims 5 and 6,
**characterized** in that a plurality of electrode systems is disposed on said substrate body, with said substrate body consisting of a thin membrane having through-openings in the centre of said circular electrodes, which openings may be varied in terms of their permeability to particles by means of said high-frequency fields.

8. Device according to Claim 1,
**characterized** in that said electrodes are provided in the form of elliptical paths having a common focus and having major axes which are located on a straight line.

9. Device according to Claim 1,
**characterized** by a substrate body on which four or more star-shaped electrodes are disposed around a central region, and including an electronic circuit applying an appropriate voltage to said electrodes in succession so as to create a high-frequency field rotating on a circular path.

10. Device according to any of Claims 1 to 9,
**characterized** in that the electrode surfaces are coated with insulating materials having a rough or a smooth structure, with said coating including troughs, corrugations and regions of different thickness.

11. Device according to any of Claims 1 to 9,
**characterized** in that the regions between said electrodes and said channels present partial recesses or projections and regions of different roughness of their surfaces.

12. Device according to any of Claims 1 to 11,
**characterized** in that said substrate body consists of a semiconductor material (preferably a silicon wafer), glass or ceramic material, that said partial recesses or projections are produced by etching processes, that said electrodes are made of a chemically inert material, preferably gold, and are structured by photolithographic methods and galvanically moulded, and in that the dielectric layers on said electrodes consist of SiO₂, Si₃N₄ or TiO₂.

13. Device according to any of Claims 1 to 12,
**characterized** in that said electronic circuit for generating said travelling electric fields and for evaluating the movements of the particles is integrated, together with said multi-electrode system, on a common substrate body.

14. Device according to any of Claims 1 to 13,
**characterized** in that a cover plate of a semiconductor material, ceramic or glass is provided for encasing the system, which is connected to said base plate and may be equally provided with electrodes and/or troughs and channels.

15. Device according to any of Claims 1 to 14,
**characterized** in that several substrate bodies may be interconnected so as to form cascades or to create spaces or channels in which the particles may be stored, separated, collected or transferred.

16. Method employing a device according to any of Claims 1 to 15,
**characterized** in that the particles are suspended in a liquid or a gel of low electric conductivity and are exposed to an electric field composed of one or several high-frequency fields travelling in definable directions.

17. Method according to Claim 16,
**characterized** in that the particles are electrically guided, by means of inhomogeneities of the field.

18. Method according to Claim 16,
**characterized** in that the particles are guided by means of mechanical restrictors.

19. Method according to any of Claims 16 to 19,
**characterized** in that the amplitude of the applied voltage ranges from 10⁻² to 100 Volt.

## Revendications

1. Dispositif à manipuler des particules diélectriques, comprenant:
- un corps de base,
- un système à électrodes multiples, disposé sur ledit corps de base afin d'engendrer un champ électrique d'ondes progressives et comprenant des électrodes disposées en juxtaposition, de façon orthogonale environ au sens de progression dudit champ d'ondes progressives, et
- un circuit électronique à appliquer successivement des tensions électriques appropriées auxdites électrodes,
**caractérisé** en ce que les distances entre lesdites électrodes, ainsi que leurs largeurs, sont plus petites que le diamètre des particules à manipuler, et
en ce que les fréquences de progression desdits champs électriques se trouvent dans une fourchette de 0.1 à 100 MHz.

2. Dispositif selon la revendication 1,
**caractérisé** en ce que lesdites électrodes ont une forme rectangulaire allongée et sont disposées, à distances égales, l'une en parallèle à l'autre, de façon que la direction dudit champ d'ondes progressives s'étend en sens orthogonal aux axes longitudinales desdites électrodes.

3. Dispositif selon la revendication 1 ou 2,
**caractérisé** en ce que lesdites électrodes présentent des discontinuités, à partir d'une électrode dans la zone centrale dudit système à électrodes multiples, dans une zone qui s'élargit en V en sens dudit champ d'ondes progressives, dans lequel lesdites électrodes sont flambées au voisinage de ladite discontinuité de façon à s'ouvrir, à angles droits, dans ladite zone en V.

4. Dispositif selon une quelconque des revendications 1 à 3,
**caractérisé** en ce que deux rangées d'électrodes sont disposées de façon que les électrodes desdites deux rangées sont opposées les unes aux autres, et en ce qu'une voie sans électrode est formée entre lesdites deux rangées, le long de la direction de progression du champ électrique, et en ce que les électrodes desdites deux rangées sont décalées de façon que la largeur de ladite voie sans électrode s'accroît d'une valeur constante à un multiple de cette valeur, et en ce que dans la zone de la grande largeur de voie une rangée d'électrodes supplémentaire, à largeur d'électrode augmentée, est disposée à former un branchement de voie, et en ce que deux autres électrodes ponctuelles sont disposées à la position du branchement.

5. Dispositif selon la revendication 1,
**caractérisé** en ce que lesdites électrodes sont prévues sous forme de parcours annulaires, disposés en arrangement concentrique à distances égales.

6. Dispositif selon la revendication 5,
**caractérisé** en ce que lesdites électrodes sont prévues sous forme de secteurs d'un anneau, en renfermant des voies sans électrode.

7. Dispositif selon une quelconque des revendications 5 et 6,
**caractérisé** en ce qu'une pluralités de systèmes à électrodes est disposée sur ledit corps de base, ce corps de base étant formé par une membrane mince à des trous de passage au centre desdites électrodes circulaires, lesquels trous sont aptes à être variés en perméabilité aux particules moyennant desdits champs à haute fréquence.

8. Dispositif selon la revendication 1,
**caractérisé** en ce que lesdites électrodes sont prévues sous forme des parcours elliptiques, à un foyer commun, à des grands axes qui se trouvent sur une ligne droite.

9. Dispositif selon la revendication 1,
**caractérisé** par un corps de base sur lequel quatre ou plus électrodes sont disposées en étoile autour d'une zone centrale, qui comprend un circuit électronique pour appliquer successivement une tension appropriée auxdites électrodes, afin d'engendrer un champ à haute fréquence qui se trouve en rotation, en parcourant une trajectoire circulaire.

10. Dispositif selon une quelconque des revendications 1 à 9,
**caractérisé** en ce que les surfaces desdites électrodes sont couvertes par des matières isolantes à structure rugueuse ou lisse, cette couche de revêtement présentant des creux, des ondulations ou des zones à épaisseurs différentes.

11. Dispositif selon une quelconque des revendications 1 à 9,
**caractérisé** en ce que les zones entre lesdites électrodes et lesdites voies présentent des creux ou bosses partiels et des zones à rugosités différentes de leurs surfaces.

12. Dispositif selon une quelconque des revendications 1 à 11,
**caractérisé** en ce que ledit corps de base consiste en une matière semi-conductrice (de préférence une galette au silicium), en verre ou une matière céramique; en ce que lesdits creux ou bosses partiels sont produits par des processus de gravure; en ce que lesdites électrodes sont faites d'une matière chimiquement inerte, notamment de l'or de préférence, et sont structurées par des méthodes photolithographiques et moulées par galvanisation, et en ce que les couches diélectriques sur lesdites électrodes consistent en SiO₂, Si₃N₄ ou TiO₂.

13. Dispositif selon une quelconque des revendications 1 à 12,
**caractérisé** en ce que ledit circuit électronique à engendrer lesdits champs électriques d'ondes progressives et à évaluer les mouvements des particules est intégré, ensemble avec ledit système à électrodes multiples, sur un corps de base commun.

14. Dispositif selon une quelconque des revendications 1 à 13,
**caractérisé** en ce qu'une plaque de couverture en une matière semi-conductrice, en céramique ou en verre est prévue au blindage du système, qui est reliée à ladite plaque de base et qui peut également être prévue des électrodes et/ou creux et voies.

15. Dispositif selon une quelconque des revendications 1 à 14,
**caractérisé** en ce que plusieurs des corps de base peuvent être raccordé l'un à l'autre, en montant des cascades ou en formant des espaces ou voies où on peut accumuler, séparer, concentrer ou transporter les particules.

16. Procédé utilisant un dispositif selon une quelconque des revendications 1 à 15,
**caractérisé** en ce que les particules sont mises en suspension dans un liquide ou gel à basse conductivité, et sont exposées à un champ électrique composé d'un ou plusieurs champs d'ondes progressives à haute fréquence en directions spécifiables.

17. Procédé selon la revendication 16,
**caractérisé** en ce que les particules sont guidées, par voie électrique, en utilisant des non-homogénéités dudit champ.

18. Procédé selon la revendication 16,
**caractérisé** en ce que les particules sont guidées au moyen des éléments limitateurs mécaniques.

19. Procédé selon une quelconque des revendications 16 à 19,
**caractérisé** en ce que l'amplitude de la tension appliquée varie dans la fourchette entre 10⁻² et 100 Volt.
